Europäisches Patentamt

European Patent Office

Office européen des brevets

(11) Veröffentlichungsnummer: **0 005 505**
**A2**

(12) # EUROPÄISCHE PATENTANMELDUNG

(21) Anmeldenummer: 79101413.7

(22) Anmeldetag: 09.05.79

(51) Int. Cl.²: **C 08 J 9/00**
**C 02 C 5/02**

(30) Priorität: 12.05.78 DE 2820732

(43) Veröffentlichungstag der Anmeldung:
28.11.79 Patentblatt 79/24

(84) Benannte Vertragsstaaten:
BE CH DE FR GB NL

(71) Anmelder: BASF Aktiengesellschaft
Carl-Bosch-Strasse 38
D-6700 Ludwigshafen(DE)

(72) Erfinder: Naarmann, Herbert, Dr.
Haardtblick 15
D-6719 Wattenheim(DE)

(72) Erfinder: Marx, Mathias, Dr.
Seebacher Strasse 49
D-6702 Bad Duerkheim 1(DE)

(72) Erfinder: Jarre, Wolfgang, Dr.
Limesstrasse 3
D-6700 Ludwigshafen(DE)

(54) Chelatbildner und/oder Chelatkomplexe enthaltende offenzellige Polyurethanschaumstoffe, ein Verfahren zu deren Herstellung sowie die Verwendung zur Adsorption von Schwermetallionen aus Abwässern.

(57) Die Erfindung betrifft offenzellige Polyurethanschaumstoffe, ein Verfahren zu deren Herstellung und Verwendung, aus organischen Polyisocyanaten, Polyolen, Treibmitteln, Katalysatoren und gegebenenfalls Zusatzstoffen, die Chelatbildner (A), die keine mit NCO-Gruppen reaktive Wasserstoffatome gebunden enthalten und/oder Chelatkomplexe (B) mit Stabilitätskonstanten $\log K < 5$ inkorporiert enthalten, mit der Maßgabe, daß die Chelatbildner (A) oder Chelatkomplexe (B) mit Kupferionen 1 : 1 Chelate mit Stabilitätskonstanten $\log K \geq 5$ bilden. Geeignete Chelatbildner (A) oder Chelatkomplexe (B) sind insbesonders heterocyclische aromatische Amine, $\beta$-Diketone und Salze von Aminocarbonsäuren.

Die offenzelligen Polyurethan-Schaumstoffe eignen sich zur Adsorption von Schwermetallionen aus gegebenenfalls organische Lösungsmittel enthaltenden Abwässern.

EP 0 005 505 A2

Croydon Printing Company Ltd.

0005505

BASF Aktiengesellschaft                    O. Z. 0050/033182

Chelatbildner und/oder Chelatkomplexe enthaltende offenzellige Polyurethanschaumstoffe, ein Verfahren zu deren
Herstellung sowie die Verwendung zur Adsorption von Schwermetallionen aus Abwässern

Die Erfindung betrifft offenzellige Polyurethanschaumstoffe, die Chelatbildner und/oder Chelatkomplexe inkorporiert enthalten, ein Verfahren zur Herstellung derartig modifizierter offenzelliger Polyurethanschaumstoffe sowie die Verwendung der Produkte zur Adsorption von Schwermetallionen aus Abwässern.

Die Herstellung von Polyurethanschaumstoffen aus Polyisocyanaten, Polyhydroxyverbindungen, gegebenenfalls Kettenverlängerungsmitteln, Hilfs- und Zusatzstoffen ist aus zahlreichen Patent- und Literaturveröffentlichungen bekannt. Verweisen möchten wir beispielsweise auf die Monographien von J.H. Saunders und K.C. Frisch, High Polymers, Band XVI "Polyurethane", Teil I und II, (Verlag Interscience Publishers, New York 1962 bzw. 1964) und R. Vieweg und A. Höchtlen, Kunststoff-Handbuch, Band VII, Polyurethane, (Carl Hanser Verlag, München 1966).

Es ist ferner vorgeschlagen worden zur Absorption von Öl oder organischen Lösungsmitteln von Wasseroberflächen offenzellige Schaumstoffe, beispielsweise aus Polyuretha-

M/K1

nen, Harnstoff-Formaldehydkondensaten, Polystyrol, Cellu- loseacetat u.a. zu verwenden. Nach Angaben der US-PS 3 779 908 läßt man zur Ölabsorption eine Dispersion von Rohöl in Wasser durch einen flexiblen offenzelligen Polyurethanschaumstoff fließen. Auf diese Weise können organische Bestandteile, insbesondere organische Lösungsmittel, aus Industrieabwässern abgetrennt werden. Nicht adsorbiert werden hierbei jedoch Schwermetallionen, beispielsweise Kupfer-, Blei-, Cadmium- und Quecksilberionen, die aufgrund ihrer Giftigkeit nicht nur jedes Leben in Flüssen erheblich beeinträchtigen, sondern auch das Grundwasser gefährden können.

Aufgabe der vorliegenden Erfindung war es, Schaumstoffe mit guten hydrodynamischen Eigenschaften zu entwickeln, mit deren Hilfe Schwermetallionen aus gegebenenfalls organischen Bestandteilen, insbesondere organische Lösungsmittel, enthaltenden Abwässern abgetrennt werden können.

Diese Aufgabe konnte gelöst werden mit Hilfe von offenzelligen Polyurethanschaumstoffen, die Komplexbildner für Schwermetallionen inkorporiert enthalten.

Gegenstand der vorliegenden Erfindung sind somit offen- zellige Polyurethanschaumstoffe aus organischen Polyiso- cyanaten, Polyolen, Treibmitteln, Katalysatoren und gegebenenfalls Zusatzstoffen, die dadurch gekennzeichnet sind, daß sie

A)  Chelatbildner, die keine mit NCO-Gruppen reaktive Wasserstoffatome gebunden enthalten und/oder

B)  Chelatkomplexe mit einer Stabilitätskonstanten log K$<$5 für 1 : 1 Chelate aus einem Mol Metallionen und einem Mol Chelatbildner enthalten mit der Maß-

0005505

gabe, daß die Chelatbildner (A) und/oder Chelatkomplexe (B) mit Kupferionen 1 : 1 Chelate mit Stabilitätskonstanten log K $\geq$ 5 bilden.

Überraschenderweise wurde gefunden, daß die Chelatbildner, gleichgültig ob sie chemisch gebunden oder in Art eines Füllstoffs in den offenzelligen Polyurethanschaumstoff eingelagert sind, nicht ihre Fähigkeit zur Komplexbildung verlieren und auch nicht durch lösungsmittelhaltige Abwasser ausgewaschen werden. Vorteilhaft ist ferner, daß die erfindungsgemäßen offenzelligen Polyurethanschaumstoffe auch Öl und organische, gegebenenfalls halogenhaltige Lösungsmittel zu adsorbieren vermögen, obwohl sie hierzu aus Preisgründen üblicherweise nicht verwendet werden.

Die erfindungsgemäßen offenzelligen Polyurethanschaumstoffe, die eine Dichte von 20 bis 200 g/Liter, vorzugsweise von 40 bis 100 g/Liter und eine Porosität von 80 bis 100 %, vorzugsweise von 90 bis ungefähr 100 % aufweisen (gemessen nach der Methode zur Bestimmung der Porosität im SPE-Journal, März 1962, Seiten 321 - 323) können sowohl nach dem Präpolymerverfahren als auch vorzugsweise nach dem one shot-Verfahren aus organischen Polyisocyanaten, Polyolen, Treibmitteln, Katalysatoren gegebenenfalls Kettenverlängerungsmitteln und Zusatzmitteln unter Mitverwendung der oben genannten Chelatbildner (A) und/oder eines Chelatkomplexes mit einer Stabilitätskonstanten log K < 5 für 1 : 1 Chelate erhalten werden.

Zu den zur Herstellung der offenzelligen Polyurethanschaumstoffe verwendbaren Aufbaukomponenten ist folgendes auszuführen:

Als organische Polyisocyanate kommen aliphatische, cycloaliphatische und vorzugsweise aromatische Di- und Polyiso- cyanate in Betracht. Im einzelnen seien beispielhaft genannt: aliphatische Diisocyanate, wie Hexamethylendiisocyanat-1,6, cycloaliphatische Di- und Polyisocyanate, wie 1,3- und 1,4-Cyclohexan-diisocyanat, 1-Methylcyclohexan-2,4- und 2,6-diisocyanat, Isophorondiisocyanat, 4,4'-, 2,4'- und 2,2'-Dicyclohexylmethan-diisocyanate und Polycyclohexyl-polymethylen-polyisocyanate; cycloaliphatischaromatische Diisocyanate wie 4-Cyclohexyl-4'-phenyl-diisocyanat und 4'-Cyclohexyl-4'-phenyl-methan-diisocyanat und aromatische Di- und Polyisocyanate wie 1,3- und 1,4-Phenylen-diisocyanat, Naphthalin-diisocyanate und vorzugsweise 2,4- und 2,6-Toluylen-diisocyant sowie deren Isomerengemische, 2,4'-, 4,4'- und 2,2'-Diphenylmethan-diisocyanate sowie deren Isomerengemische und Mischungen aus Toluylendiisocyanaten und Gemischen aus Diphenylmethan-diisocyanaten und Polyphenyl-polymethylen-polyisocyanaten (Roh-MDI). Insbesondere verwendet werden jedoch Gemische aus Diphenylmethan-diisocyanaten und Polyphenyl-polymethylen-polyisocyanaten mit einem Gehalt an Diphenylmethan-diisocyanatIsomeren von 50 bis 75 Gew.%, bezogen auf das Gesamtgewicht, und einer Funktionalität von 2,1 bis 3,5 vorzugsweise von 2,2 bis 2,5.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 33 94 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 10 72 956, der US-PS 3 567 765 und der DE-PS 12 31 688 genannt werden.

Als Polyole werden zweckmäßigerweise lineare und/oder verzweigte Polyesterole und vorzugsweise Polyätherole mit Molekulargewichten von ungefähr 1 500 bis ungefähr 10 000, vorzugsweise von ungefähr 3 000 bis ungefähr 5 000 und Hydroxylzahlen von ungefähr 20 bis ungefähr 150, vorzugsweise von ungefähr 25 bis ungefähr 50 verwendet.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Pimelinsäure, Korksäure, Azelainsäure, Sebacinsäure, Undecandisäure, Dodecandisäure und vorzugsweise Bernstein-, Glutar- und Adipinsäure, cycloaliphatische Dicarbonsäuren, wie 1,3- und 1,4-Cyclohexan-dicarbonsäure und aromatische Dicarbonsäuren, wie Phthalsäure und Terephthalsäure. Beispiele für zwei- und mehrwertige, insbesondere dreiwertige Alkohole sind: Äthylenglykol, Diäthylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6. Sofern zur Herstel- lung der Polyesterole mehrwertige, insbesondere dreiwertige, Alkohole mitverwendet werden, muß deren Gehalt so berechnet werden, daß die Funktionalität der erhaltenen Polyesterole maximal 3,5 ist.

Bewährt haben sich insbesonders auch solche Polyesterole, die durch Polykondensation eines Dicarbonsäuregemisches, das bezogen auf das Gesamtgewicht der genannten Dicarbonsäuren enthält: 20 bis 35 Gew.%, vorzugsweise 28 bis 33 Gew.% Bernsteinsäure, 35 bis 50 Gew.%, vorzugsweise 40 bis 45 Gew.% Glutarsäure und 20 bis 32 Gew.%, vorzugsweise 24 bis 28 Gew.% Adipinsäure und Alkoholmischungen aus Äthylenglykol/Diäthylenglykol, Äthylenglykol/Trimethylolpropan, Diäthylenglykol/Trimethylolpropan, Äthylenglykol/Triisopropanolamin und Diäthylenglykol/Triisopropanolamin erhalten werden. Das Dicarbonsäuregemisch kann neben den genannten Dicarbonsäuren noch bis zu 5 Gew.%, vorzugsweise 2 bis 3 Gew.%, bezogen auf das Gesamtgewicht, Verunreinigungen enthalten, welche im wesentlichen aus Imiden der Bernstein- und Glutarsäure bestehen. Dicarbonsäuregemische der genannten Art können beispielsweise als Nebenprodukte bei der Herstellung von Adipinsäure durch Oxidation von Cyclohexanol oder Cyclohexanon mit Salpetersäure gewonnen werden. Erfindungsgemäß können die Polyesterole als solche oder in Form von Mischungen eingesetzt werden.

Vorzugsweise als Polyole verwendet werden jedoch Polyätherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 3 aktive Wasserstoffatome enthält, hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, Dicarbonsäuren, wie Bernsteinsäure, Adipinsäure, Phthalsäure und Terephthalsäure, Diamine und N,N'-dialkylsubstituierte Diamine mit 1 bis 4 Kohlenstoffatomen im Alkylrest, wie gegebenenfalls dialkylsubstituiertes Äthylendiamin, 1,2- bzw. 1,3-Propylendiamin, 1,4-Butylendiamin, 1,6-Hexamethylendiamin, 4,4'-, 2,4'- und 2,2'-Diaminodiphenylmethan sowie Alkanolamine, wie Trialkanolamine, beispielsweise Triäthanolamin und Triisopropanolamin, Dialkanolamine, wie Diäthanolamin und Diisopropanolamin, N-Alkyl-diäthanolamine, Äthanolamin und vorzugsweise mehrwertige, insbesondere zweiwertige Alkohole, wie Äthylenglykol, Propylenglykol, Diäthylenglykol, Dipropylenglykol, Butylenglykol-1,4, Hexamethylenglykol-1,6, Glycerin und Trimethylolpropan und Pentaerythrit. Besonders geeignet und daher vorzugsweise verwendet werden Polyätherole mit Molekulargewichten von 2 500 bis 5 000 und Hydroxylzahlen von 20 bis 80. Die genannten Polyesterole und Polyätherole können auch in Form von Mischungen eingesetzt werden.

Erfindungsgemäß enthalten die offenzelligen Polyurethanschaumstoffe Chelatbildner (A), die keine mit NCO-Gruppen reaktive Wasserstoffatome besitzen und/oder Chelatkomplexe (B) mit Stabilitätskonstanten log K < 5, vorzugsweise log K = 2,0 bis log K = 3 für 1 : 1 Chelate aus einem Mol Metallionen und einem Mol Chelatbildner mit der Maßgabe, daß die Chelatbildner (A) bzw. Chelatkomplexe (B) mit Kupferionen 1 : 1 Chelate mit Stabilitätskonstanten log K ≥ 5, vorzugsweise mit Stabilitätskonstanten von log K = 5 bis log K = 60, insbesondere log K = 5,5 bis log K = 30, bilden. Die log K-Werte sind hierbei definiert als die Logarithmen der Bildungskonstanten für 1 : 1 Chelate, d.h. für Chelatkomplexe, die aus einem Mol Metallionen und einem Mol Chelatbildner erhalten werden. Die Stabilitätskonstan- ten können nach diversen Methoden bestimmt werden. Beispielhaft genannt seien die Methoden: pH-Messung, Ionenaustausch, mit Hilfe des Beer'schen Gesetzes, Oxidationspotentiale, polarographische Messungen und Löslichkeitsbestimmungen. Die Stabilitätskonstanten und ihre Bestimmungsmethoden werden beispielsweise beschrieben in der Monographie "Die Chemie der Metallchelat-Verbindungen" von
A.E. Martell und M. Calvin, Verlag Chemie GmbH, Weinheim/
Bergstraße, 1958, Seiten 69 bis 123 und 462-518.

Geeignete Chelatbildner (A), die unter den Reaktionsbedingungen zur Herstellung der Polyurethanschaumstoffe keine
mit Isocyanatgruppen reaktionsfähige Wasserstoffatome
gebunden enthalten und die in Gegenwart von Kupferionen
1 : 1 Chelate mit Stabilitätskonstanten $\log K \geq 5$ bilden,
sind beispielsweise Salze von tertiären Aminogruppen aufweisenden Poly- und Monocarbonsäuren, wie die Natriumsalze
der Nitrilo-triessigsäure, Äthylendiamin-tetraessigsäure
und 1,2-Diamino-cyclohexan-N,N'-tetraessigsäure sowie dem
Natriumsalz der Chinaldinsäure; heterocyclische aromatische
Amine, wie Chinolin, ß-Naphthochinolin, Dipyridyl-(2,2'),
Dichinolyl-2,2' und gegebenenfalls substituierte ortho-
-Phenanthroline, wie o-Phenanthrolin, 5-Chlor-, 5-Nitro-,
5-Methyl- und 5-Phenyl-1,10-phenanthrolin, das Natriumsalz
von Mercaptobenzthiazol, Polyketone, wie das Natriumsalz
der Rhodizonsäure und ß-Diketone, wie Acetylaceton und
Benzoylaceton. Vorzugsweise verwendet werden o-Phenanthrolin, 2,2-Dichinolyl, Benzoylaceton und die Natriumsalze von
Mercaptobenzthiazol, Rhodizonsäure, Chinaldinsäure und
Äthylendiamin-tetraessigsäure.

Anstelle der Chelatbildner (A), die bevorzugt Anwendung
finden, können auch Chelatkomplexe (B) oder Mischungen aus
Chelatbildner (A) und Chelatkomplexen (B) in die offenzelligen Polyurethanschaumstoffe inkorporiert werden. Hierbei werden zweckmäßigerweise solche Chelatkomplexe (B) verwendet, die möglichst kleine Stabilitätskonstanten für 1 : 1 Chelate aus einem Mol Metallionen, vorzugsweise Erdalkalimetallionen, insbesondere Calciumionen und einem Mol Chelatbildner besitzen, so daß die Metallionen relativ leicht ausgetauscht und durch solche ersetzt werden können, die stabile Chelatkomplexe mit hohen Stabilitätskonstanten bilden. Bewährt haben sich insbesondere Chelatkomplexe von Erdalkalimetallionen mit Stabilitätskonstanten log K < 5, vorzugsweise von log K 2,5 bis log K = 3, bei denen das Erdalkalimetallion leicht durch Schwermetallionen, wie Blei, Cadmium, Quecksilber, Nickel, Silber, Gold, Platin, Palladium, Kupfer u.a. ersetzt werden kann, so daß Chelatkomplexe mit den genannten Schwermetallionen gebildet werden, die Stabilitätskonstanten log K > 5 für 1 : 1 Chelate, insbesondere mit Kupferionen als Schwermetallion besitzen. Als Chelatkomplexe (B) kommen beispielsweise Komplexe aus Alkalimetallen, wie Lithium, Natrium und Kalium und Erdalkalimetallen, wie Calcium, Strontium und Barium mit folgenden Chelatbildnern in Betracht: Aminosäuren, wie Asparaginsäure und Glykokoll, Serin und Tryptophan; Thioharnstoff, Diphenylcarbazid, heterocyclischen Verbindungen, wie 1,2,3-Benztriazol, 8-Oxochinolin und Phenole, wie o-Aminophenol, o-Aminothiophenol und 3,6-Disulfo-1,8-dioxynaphthalin. Vorzugsweise verwendet werden Thioharnstoff, Diphenylcarbazid und 1,2,3-Benztriazol.

Die genannten Chelatbildner (A) und/oder Chelatkomplexe (B) werden der schaumfähigen Reaktionsmischung in Mengen von 5 bis 50 Gew.%, vorzugsweise von 15 bis 30 Gew.%, bezogen auf das Gesamtgewicht der eingesetzten organischen Polyisocyanate und Polyole, einverleibt.

Zur Herstellung der offenzelligen Polyurethanschaumstoffe können gegebenenfalls auch Kettenverlängerungsmittel

mitverwendet werden. Geeignete Kettenverlängerungsmittel besitzen Molekulargewichte von 17 bis ungefähr 300 und sind üblicherweise di- bis tetra-, vorzugsweise difunktionell. Im einzelnen seien beispielhaft genannt: Hydrazin, aliphatische Diamine, wie Äthylen-, 1,4-Butylen-und 1,6-Hexamethylendiamin, Alkanolamine, wie Äthanolamin, Diäthanolamin, N-Methyl-diäthanolamin und Triäthanolamin, Wasser, Triole, wie Glycerin und Trimethylolpropan, aromatisch-aliphatische Diole, wie Di-(ß-hydroxyäthyl)-hydrochinon und vorzugsweise aliphatische Diole mit 2 bis 6 Kohlenstoffatomen, wie Äthylenglykol, Diäthylenglykol, 1,4-Butylenglykol und 1,6-Hexamethylenglykol.

Als Treibmittel wird Wasser verwendet, das mit den Isocyanatgruppen reagiert und Kohlendioxid liefert. Vorzugsweise werden 2 bis 5 Gew.%, insbesondere 2,5 bis 4 Gew.% Wasser, bezogen auf das Gewicht des Polyols verwendet. Anstelle von Wasser allein können auch Mischungen aus Wasser und chemisch inerten, niedrigsiedenden, gegebenenfalls halogenierten Kohlenwasserstoffen oder aliphatische Äther als Treibmittel angewandt werden. In Betracht kommen beispielsweise gegebenenfalls halogenierte Kohlenwasserstoffe mit Siedepunkten unter 50°C, vorzugsweise zwischen -50°C und 30°C bei Atmosphärendruck. Im einzelnen seien beispielhaft genannt halogenierte Kohlenwasserstoffe, wie Monochlordifluormethan, Dichlormonofluormethan, Dichlordifluormethan und Trichlorfluormethan und deren Gemische und Kohlenwasserstoffe wie Propan und Isobutan sowie Dimethyläther. Geeignete Mischungen aus Wasser und gegebenenfalls halogenierten Kohlenwasserstoffen bestehen im allgemeinen aus 10 bis 50 Gew.% Wasser und 50 bis 90 Gew.% gegebenenfalls halogenierten Kohlenwasserstoffen, wobei die Gewichtsprozente bezogen sind auf das Gesamtgewicht der Treibmittelmischung. Die erforderlichen Mengen an Treibmittelmischung lassen sich auf einfache Weise in Abhängigkeit vom Mischungs- verhältnis Wasser zu gegebenenfalls halogeniertem Treib- mittel sowie der gewünschten Schaumstoffdichte experimentell ermitteln und betragen ungefähr 2 bis 30, vorzugsweise 3 bis 15 Gew.%, bezogen auf das Polyolgewicht.

Dem schaumfähigen Reaktionsgemisch können ferner Katalysatoren, die die Polyurethanbildung beschleunigen und gegebenenfalls Zusatzstoffe, wie sie üblicherweise zur Herstel- lung von Polyurethan-Weichschaumstoffen Anwendung finden, einverleibt werden. In Betracht kommen beispielsweise oberflächenaktive Stoffe, Porenregler, Antioxidationsmittel, Hydrolysenschutzmittel, Farbstoffe und andere Zusätze.

Geeignete Katalysatoren zur Beschleunigung der Umsetzung zwischen den Polyolen, dem Wasser, gegebenenfalls Kettenverlängerungsmitteln und den Polyisocyanaten sind beispielsweise tertiäre Amine, wie Dimethylbenzylamin, N,N,N',N'- -Tetramethyl-diamino-äthyläther, Bis-(dimethyl-aminopro- pyl)-harnstoff, N-Methyl- bzw. N-Äthylmorpholin, Dimethyl- piperazin, 1,2-Dimethylimidazol, 1-Azo-bicyclo-(3,3,0)- octan und vorzugsweise Triäthylendiamin, Metallsalze, wie Zinndioctat, Bleioctoat, Zinn-diäthylhexoat und vorzugsweise Zinn-(II)salze und Dibutylzinndilaurat sowie insbesonders Mischungen aus tertiären Aminen und organischen Zinnsalzen. Vorzugsweise verwendet werden 1 bis 5 Gew.% Katalysator auf Basis tertiärer Amine und/oder 0,05 bis 2,0 Gew.% Metallsalze, bezogen auf das Polyolgewicht.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Weichschaumstoffe zu regulieren. Genannt seien beispielhaft Siloxan-Oxyalkylen- -Mischpolymerisate und andere Organopolysiloxane, oxäthylierte Alkylphenole, oxäthylierte Fettalkohole, Paraffin- öle, Ricinusöl- bzw. Ricinolsäureester und Türkischrotöl, die in Mengen von 0,2 bis 6 Gewichtsteilen pro 100 Gewichtsteilen Polyisocyanat angewandt werden.

Nähere Angaben über die oben genannten anderen üblichen Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Zur Herstellung der Chelatbildner (A) und/oder Chelatkomplexe (B) enthaltenden offenzelligen Polyurethanschaumstoffe wird üblicherweise eine Mischung aus Polyol, Chelatbildner (A) und/oder Chelatkomplex (B), Wasser und gegebenenfalls Kettenverlängerungsmittel mit den organischen Polyisocyanaten in Gegenwart von Katalysatoren und gegebenenfalls zusätzlichen physikalisch wirkenden Treibmitteln und Zusatzstoffen bei Temperaturen von 10 bis 40°C, vorzugsweise 15 bis 25°C in solchen Mengen zur Umsetzung gebracht, daß das Verhältnis von Zerewitinoff aktiven Wasserstoffatomen der Polyole und gegebenenfalls Kettenverlängerungsmittel zu NCO-Gruppen der Polyisocyanate 0,7 bis 1,3 : 1, vorzugsweise 0,9 bis 1,1 : 1 beträgt. Bei Verwendung einer Mischkammer mit mehreren Zulaufdüsen können die flüssigen Ausgangsstoffe oder, sofern die Komponenten fest sind, in Form von Lösungen oder Suspensionen, einzeln zugeführt und in der Mischkammer intensiv vermischt werden. Als besonders zweckmäßig hat es sich jedoch erwiesen, nach dem Zweikomponenten-Verfahren zu arbeiten und die Mischung aus Polyol, Chelatbildner (A) und/oder Chelatkomplex (B), Wasser, Katalysator, gegebenenfalls Kettenverlängerungsmittel, physikalisch wirkendes Treibmittel und Zusatzstoffe zu der Komponente A zu vereinigen und als Komponente B das organische Polyisocyanat zu verwenden.

BASF Aktiengesellschaft — 13 — O.Z. 0050/033182

Die schaumfähige Reaktionsmischung wird in eine geeignete Form, die beispielsweise zylindrisch, kegel- oder würfelförmig sein kann, eingebracht und dort aufschäumen lassen.

Die erfindungsgemäßen offenzelligen Polyurethanschaumstoffe werden wegen ihrer guten hydrodynamischen Eigenschaften als Filtermaterial verwendet. Sie eignen sich insbesondere zur Abtrennung von Schwermetallionen, wie Blei, Quecksilber, Cadmium, Kupfer, Nickel, Selen, Tellur, Germanium, Silber, Gold, Palladium, Platin u.a. aus gegebenenfalls organische Bestandteile enthaltenden Wasser, insbesonders Industrieabwässern, wobei eventuelle vorhandene Ölreste und Lösungsmittelrückstände zusätzlich adsorbiert werden.

Die in den Beispielen genannten Teile beziehen sich auf das Gewicht.

0005505

Beispiele 1 bis 9

Eine Mischung aus

400 Teilen eines Polyätherols, hergestellt aus Dipropylenglykol, Äthylenoxid und Propylenoxid mit einem Molekulargewicht von ungefähr 4 000 und einer OH-Zahl von 28,

12 Teilen Wasser,

0,8 Teilen eines Aminkatalysators (Handelsprodukt ®Demorapid PV der Bayer AG),

0,8 Teilen Bis-[ß-(N,N-dimethylamino)-äthyl]-äther,

0,8 Teilen Triäthylendiamin,

56 Teilen Schaumstabilisator auf Polysiloxan-Polyoxyalkylenpolymerisatbasis (Handelsprodukt ®Tegostol B 4690 der Goldschmidt AG, Essen),

60 Teilen Methylenchlorid,

40 Teilen Trichlorfluormethan und

220 Teilen eines der in Tabelle 1 genannten Chelatbildner (A) oder Chelatkomplexe (B)

werden bei 25°C mit

238 Teilen eines Gemisches aus Diphenylmethan-diisocyanaten und Polyphenyl-polymethylen-polyisocyanaten (Roh-MDI) mit einem Diphenylmethan-diisocyanatgehalt von 55 Gew.% intensiv gemischt und in einem Zylinder mit einem Durchmesser von 9 cm aufschäumen gelassen.

Die verwendeten Chelatbildner (A) bzw. Chelatkomplexe (B) und die Dichten der erhaltenen offenzelligen Polyurethanschaumstoffe sind in Tabelle 1 zusammengefaßt.

Tabelle 1

| Beispiele | Chelatbildern bzw. Chelatkomplex | Schaumgewicht g/l |
|-----------|-----------------------------------|-------------------|
| 1 | Chelatkomplex aus Calciumionen und Thioharnstoff | 62 |
| 2 | Chelatkomplex aus Calciumionen und 1,2,3-Benztriazol | 54 |
| 3 | Chelatkomplex aus Calciumionen und Diphenylcarbazid | 81 |
| 4 | Chelatkomplex aus Benzoylaceton und Aluminiumionen | 92 |
| 5 | Natriumsalz von Mercaptobenz- thiazol | 95 |
| 6 | Natriumsalz der Rhodizonsäure | 65 |
| 7 | Natriumsalz der Chinaldinsäure | 74 |
| 8 | 2,2'-Dichinolyl | 48 |
| 9 | Mischung aus 1,2,3-Benzotriazol und Äthylendiamin-tetraessigsäure im Gewichtsverhältnis 1 : 1 | 104 |
| 9a | Chelatkomplex aus Äthylendiamin- tetraessigsäure und Magnesiumionen | 102 |

Beispiele 10 bis 22

Zur Prüfung der Absorptionsfähigkeit wurden 1000 ml der nach den Beispielen 1 bis 9 erhaltenen offenzelligen Polyurethanschaumstoffe in eine zylinderförmige Säule eingebracht, dort mit 1000 ml einer 1 gewichtsprozentigen wässerigen Metallsalzlösung versetzt und die Metallionenkonzentration der Lösung nach dem Durchfließen des Polyurethanschaumstoffes bestimmt.

Die verwendeten Polyurethanschaumstoffe, die Metallionen und die Metallionenkonzentration der Lösung nach Durchfließen des Schaumstoffes sind in Tabelle 2 zusammengefaßt.

0005505

Die Beispiele zeigen, daß die Metallionenkonzentration in den Lösungen in Abhängigkeit von den im offenzelligen Polyurethanschaumstoff inkorporierten Chelatbildner (A) oder Chelatkomplex (B) durch einmaliges Durchfließen des Schaumstoffes um den Faktor 10 bis 1000 verringert werden kann.

Tabelle 2

| Beispiel Nr. | Polyurethanschaum-stoff gemäß Bei-spiel Nr. | Metallion | Metallionenkonzentration der Lösung nach einma-ligem Durchfließen des Polyurethanschaumstoffs [%] |
|---|---|---|---|
| 10 | 1 | Blei | $< 0,01$ |
| 11 | 1 | Cadmium | $< 0,01$ |
| 12 | 1 | Kupfer | $< 0,01$ |
| 13 | 2 | Kupfer | $< 0,1$ |
| 14 | 3 | Silber | nicht mehr bestimmbar |
| 15 | 4 | Nickel | $< 0,01$ |
| 16 | 4 | Gold | $< 0,01$ |
| 17 | 5 | Quecksilber | nicht mehr bestimmbar |
| 18 | 5 | Silber | nicht mehr bestimmbar |
| 19 | 6 | Barium | $< 0,001$ |
| 20 | 7 | Cadmium | nicht mehr bestimmbar |
| 21 | 8 | Kupfer | nicht mehr bestimmbar |
| 22 | 9 | Silber | nicht mehr bestimmbar |

<u>Vergleichsbeispiel</u>

Man verfährt analog den Angaben des Beispiels 1, setzt der schaumfähigen Reaktionsmischung jedoch keinen Chelatbildner (A) oder Chelatkomplex (B) hinzu. Man erhält einen offenzelligen Polyurethanschaumstoff mit der Dichte 56 g/l.

Der offenzellige Polyurethanschaumstoff wurde analog den Angaben der Beispiele 9 bis 22 mit 1 gewichtsprozentigen Kupfer-, Cadmium-, Quecksilber- und Magnesiumsalzlösungen versetzt und nach Passieren des Schaumstoffs die Ionenkonzentration der Lösung ermittelt. Bei keiner Metallsalzlösung wurde eine Abnahme der Ionenkonzentration festgestellt.

Patentansprüche

1.  Offenzellige Polyurethanschaumstoffe aus organischen Polyisocyanaten, Polyolen, Treibmitteln, Katalysatoren und gegebenenfalls Zusatzstoffen, enthaltend

    A)  Chelatbildner, die keine mit NCO-Gruppen reaktive Wasserstoffatome gebunden enthalten und/oder

    B)  Chelatkomplexe mit einer Stabilitätskonstanten log K < 5 für 1 : 1 Chelate aus einem Mol Metallionen und einem Mol Chelatbildner

    mit der Maßgabe, daß die Chelatbildner (A) und/oder Chelatkomplexe (B) mit Kupferionen 1 : 1 Chelate mit Stabilitätskonstanten log K $\geq$ 5 bilden.

2.  Offenzellige Polyurethanschaumstoffe gemäß Anspruch 1, enthaltend 5 bis 50 Gew.% eines Chelatbildners (A) und/oder Chelatkomplexes (B) mit einer Stabilitätskon-stanten log K < 5, bezogen auf das Gesamtgewicht des eingesetzten organischen Polyisocyanats und Polyols.

3.  Offenzellige Polyurethanschaumstoffe gemäß Anspruch 1, enthaltend Chelatbildner (A) und/oder Chelatkomplexe (B) mit einer Stabilitätskonstanten log K < 5, die mit Kupferionen 1 : 1 Chelate mit Stabilitätskonstanten log K = 5 bis log K = 60 bilden.

4.  Offenzellige Polyurethanschaumstoffe gemäß Anspruch 1, enthaltend Chelatbildner (A) und/oder Chelatkomplexe (B) aus der Gruppe der heterocyclischen aromatischen Amine, ß-Diketone und Salze von Aminocarbonsäuren.

5. Verfahren zur Herstellung von offenzelligen Polyurethanschaumstoffen aus organischen Polyisocyanaten,
Polyolen, Treibmitteln, Katalysatoren und gegebenenfalls Zusatzstoffen, dadurch gekennzeichnet, daß man
der schaumfähigen Reaktionsmischung

A)  einen Chelatbildner, der keine mit NCO-Gruppen
reaktive Wasserstoffatome gebunden enthält und/
oder

B)  einen Chelatkomplex mit einer Stabilitätskonstanten log $K < 5$ für 1 : 1 Chelate aus einem Mol
Metallionen und einem Mol Chelatbildner einverleibt mit der Maßgabe, daß die Chelatbildner (A)
und/oder Chelatkomplexe (B) mit Kupferionen 1 : 1
Chelate mit Stabilitätskonstanten log $K \geq 5$
bilden, und die Reaktionsmischung aufschäumen
läßt.

6. Verwendung von offenzelligen Polyurethanschaumstoffen
gemäß Anspruch 1, enthaltend Chelatbildner (A) und/
oder Chelatkomplexe (B) zur Adsorption von Schwermetallionen aus gegebenenfalls organische Lösungsmittel enthaltenden Abwässern.